# EUROPEAN PATENT APPLICATION

(11) **EP 4 506 977 A1**
(43) Date of publication of application: **12.02.2025**
(21) Application number: 23306364.3
(22) Date of filing: 11.08.2023
(51) Int. Cl.: H01H 33/59, H02H 3/087

(54) **CURRENT BREAKING APPARATUS FOR HIGH VOLTAGE DIRECT CURRENT PATH**

(71) Applicant: SCHNEIDER ELECTRIC INDUSTRIES SAS, 92500 Rueil-Malmaison (FR)
(72) Inventor: NOVAK, Pavel, 93049 REGENSBURG (DE); PREVE, Christophe, 38330 BIVIERS (FR); GRIESHABER, Wolfgang, 69006 LYON (FR); MAKHLOUF, Samir, 01290 GRIÈGES (FR)
(74) Representative: Plasseraud IP

(57) **Abstract**

The invention relates to a current breaking apparatus (20) comprising :
- a first current breaking device (21) for interrupting a current flow in a first high voltage direct current path, comprising :
-- a main branch (A-1) inserted in the first direct current path, comprising a normally closed mechanical circuit breaker (CB1-1),
-- an auxiliary branch (B-1) connected in parallel to the mechanical circuit breaker (CB1-1), and comprising a series connection of a capacitor bank (CA-1), an inductor (L-1) and a second normally opened mechanical circuit breaker (CB2-1),
-- a surge arrester (SA-1) connected in parallel to the capacitor bank (CA-1),
-- a second auxiliary branch (C-1) connecting an intermediate terminal (11-1) comprised between the capacitor bank (CA-1) and the inductor (L-1) to an earthed connection and comprising a resistor (R-1),

in which the second mechanical circuit breaker (CB2-1) is configured for closing the auxiliary branch (B-1) in response to the appearance of a fault current in the main branch (A-1), so as to produce a current zero crossing in the main branch (A-1).

## Description

### Technical Field

This disclosure relates to medium voltage direct current distribution systems, and more particularly to a circuit and a method for interrupting a current flow in a direct current (DC) path.

### Background Art

High voltage direct current transmission can be an interesting solution for reducing overall losses of the network, and for integrating renewable electrical sources such as wind or photovoltaic powered sources. As conventional alternating current networks, direct current networks need to be protected against short circuits by current breaking devices, so called circuit breakers.

In alternating current networks, the zero crossing events of the current are used for extinguishing the electric arc generated when electrical circuit is opened, and for actually interrupting the current flow. A typical difficulty for operating direct current circuit breakers is that no zero crossing of the current naturally occurs.

In order to create zero crossing events of the DC current, a method usually referred to as current injection has been developed. According to this method, an oscillating circuit comprising a capacitance and an inductance is connected in parallel to a main path of the circuit breaker, and the current oscillations in the parallel circuit are superimposed upon the direct current flow in the main path of the circuit breaker. The resulting current combination oscillates around zero, allowing a current interruption.

Different solutions have been proposed for current injection. These solutions usually associate various switches for charging and discharging the oscillating circuit. These switches may be difficult to synchronize and to control, leading to a complex device.

A direct current network may be part of a hybrid alternating current / direct network. The type of protection may depend on the kind of earthing selected for the neutral of the hybrid AC/DC network.

The proposed solution improves the design of the known solutions. It proposes a circuit topology, utilizing alternating current switchgear configuration for interrupting the current in a direct current network. The proposed solution deals with both low ohmic earthing and high ohmic earthing of the electrical network.

### Summary

To this end, it is proposed a current breaking apparatus comprising :
- a first current breaking device for interrupting a current flow in a first high voltage direct current path between a first terminal and a second terminal, comprising :
   -- a first main branch inserted in the first direct current path, comprising a first mechanical circuit breaker, the first mechanical circuit breaker being normally closed,
   -- a first auxiliary branch connected in parallel to the first mechanical circuit breaker, and comprising a series connection of a capacitor bank, an inductor and a second mechanical circuit breaker, called first commutation switch, the second mechanical circuit breaker being normally open,
   -- a surge arrester connected in parallel to the capacitor bank,
   -- a second auxiliary branch connecting a first intermediate terminal comprised between the capacitor bank and the inductor to an earthed connection, the second auxiliary branch comprising a resistor,
in which the second mechanical circuit breaker is configured for closing the first auxiliary branch in response to the appearance of a fault current in the first main branch, so as to create a current which is superimposed upon a current flow in the first main branch and produces a current zero crossing in the first main branch.

This arrangement provides current interruption capability for pole-to-pole fault, and pole-to-earth fault with both low ohmic earthing and high ohmic earthing.

The following features can optionally be implemented, separately or in combination one with the others:

In an embodiment, the current breaking apparatus further comprises :
- a second current breaking device for interrupting a current flow in a second high voltage direct current path between a third terminal and a fourth terminal, comprising :
   -- a second main branch inserted in the second direct current path, comprising a first mechanical circuit breaker, the first mechanical circuit breaker being normally closed,
   -- a first auxiliary branch connected in parallel to the first mechanical circuit breaker, and comprising a series connection of a capacitor bank, an inductor and a second mechanical circuit breaker, called commutation switch, the second mechanical circuit breaker being normally opened,
   -- a surge arrester connected in parallel to the capacitor bank,
   -- a second auxiliary branch connecting a first intermediate terminal comprised between the capacitor bank and the inductor to an earthed connection, the second auxiliary branch comprising a resistor,
in which the second mechanical circuit breaker is configured for closing the first auxiliary branch in response to the appearance of a fault current in the second main branch, so as to create a current which superimposes to a current flow in the second main branch and produces a current zero crossing in the second main branch.

This arrangement with a second current breaking device on a second direct current path provides current interruption capability for both pole-to-pole fault and pole-to-earth fault with low ohmic earthing, and pole-to-earth fault with high ohmic earthing. Full protection is thus proposed, in combination of both breaking devices and their auxiliary branches, for the given network earthing.

According to an aspect of the current breaking device:
- the first high voltage direct current path is connected to a first pole of a hybrid AC/DC network, and
- the second high voltage direct current path is connected to a second pole of the hybrid AC/DC network.

The first pole of the hybrid AC/DC network is a positive, current supply pole.

The second pole of the hybrid AC/DC network is a negative, current return pole.

In an embodiment of the current breaking apparatus, the first current breaking device and the second current breaking device are identical.

This configuration is particularly adapted to networks with low ohmic earthing. Within the context of network with low ohmic earthing, the first current breaking device and the second current breaking device both interrupt pole-to-pole faults and pole-to-earth faults.

In an alternative embodiment of the current breaking apparatus :
- a capacitance of the capacitor bank of the first current breaking device is different from a capacitance of the capacitor bank of the second current breaking device, and/or
- an inductance of the inductor of the first current breaking device is different from an inductance of the inductor of the second current breaking device, and/or
- a resistance of the resistor of the first current breaking device is different from a resistance of the resistor of the second current breaking device.

As a variant or as a complement, the second mechanical circuit breaker of the first current breaking device is different from the second mechanical circuit breaker of the second current breaking device.

This configuration is particularly adapted to networks with high ohmic earthing. Within the context of network with high ohmic earthing, one current breaking device interrupts pole-to-pole faults and pole-to-earth faults, and the other current breaking device interrupt pole-to-earth faults only.

The first main branch and the second main branch are respectively a main electrical conduction line of the first current breaking device and of the second current breaking device.

The first auxiliary branch of the first current breaking device and the first auxiliary branch of the second current breaking device are respectively a secondary electrical conduction line of the first current breaking device and of the second current breaking device.

The second auxiliary branch of the first current breaking device and the second auxiliary branch of the second current breaking device are respectively a tertiary electrical conduction line of the first current breaking device and of the second current breaking device.

The first current breaking device can operate in a first mode, called normal operation mode, in which the first mechanical circuit breaker of the first current breaking device is in a closed state and the second mechanical circuit breaker of the first current breaking device is in an open state.

The first current breaking device can operate in a second mode, called fault mode, in which the first mechanical breaker of the first current breaking device is an open state and the second mechanical breaker of the first current breaking device is in a closed state.

The first current breaking device can switch from the first mode to the second mode in response to the appearance of a fault current in the first main branch.

The first current breaking device can further operate in a third mode, called residual current fault mode, in which the first mechanical circuit breaker is in an open state and the second mechanical circuit breaker is in an open state.

The first current breaking device can switch from the second mode to the third mode is response to the appearance of a residual fault current in the first auxiliary branch.

The first current breaking device can operate in a fourth mode, called normal operation mode after fault interruption, in which the first mechanical circuit breaker is in a closed state and the second mechanical circuit breaker is in an open state.

The first current breaking device can switch from the third mode to the fourth mode after re-charging of the capacitor bank by a current flow from the source side to the resistor of the second auxiliary branch.

The second current breaking device operates in the same way as the first current breaking device.

The second current breaking device can thus operate in a first mode, called normal operation mode, in which the first mechanical circuit breaker of the second current breaking device is in a closed state and the second mechanical circuit breaker of the second current breaking device is in an open state.

The second current breaking device can operate in a second mode, called fault mode, in which the first mechanical breaker of the second current breaking device is in an open state and the second mechanical breaker of the second current breaking device is in a closed state.

The second current breaking device can switch from the first mode to the second mode in response to the appearance of a fault current in the second main branch.

The second current breaking device can further operate in a third mode, called residual current fault mode, in which the first mechanical circuit breaker is in an open state and the second mechanical circuit breaker is in an open state.
The second current breaking device can switch from the second mode to the third mode is response to the appearance of a residual fault current in the first auxiliary branch.
The second current breaking device can operate in a fourth mode, called normal operation mode after fault interruption, in which the first mechanical circuit breaker is in a closed state and the second mechanical circuit breaker is in an open state.
The second current breaking device can switch from the third mode to the fourth mode after re-charging of the capacitor bank by a current flow from the source side to the resistor of the second auxiliary branch.

The inductance of the inductor of the first current breaking device is comprised between 10 µH and 1 mH.

The capacitance of the capacitor bank of the first current breaking device is comprised between 3 µF and 300 µF.

The resistance of the resistor of the first current breaking device is higher than 1000 Ohm.

A ratio of the pole-to-ground voltage and the resistance of the first current breaking device is lower than 2A.

A product of the inductance and the capacitance of the first current breaking device is comprised between 3.10⁻¹¹ s² and 3.10⁻⁷ s².

The surge arrester of the first current breaking device is chosen to conduct a current of less than 10 A when subjected to a pole-to-ground voltage.

The inductance of the inductor of the second current breaking device is comprised between 10 µH and 1 mH.

The capacitance of the capacitor bank of the second current breaking device is comprised between 3 µF and 300 µF.

The resistance of the resistor of the second current breaking device is higher than 1000 Ohm.

A ratio of the pole-to-ground voltage and the resistance of the second current breaking device is lower than 2A.

A product of the inductance and the capacitance of the second current breaking device is comprised 3.10⁻¹¹ s² and 3.10⁻⁷ s².

The surge arrester of the second current breaking device is chosen to conduct a current of less than 10 A when subjected to a pole-to-ground voltage.

In an embodiment, the first current breaking device further comprises a first switching device disposed on the first auxiliary branch between the inductor and a second connection of the first auxiliary branch with the first main branch.

The first switching device of the first current breaking device may be disposed on the first auxiliary branch between the second mechanical circuit breaker and a second connection of the first auxiliary branch with the first main branch.

In an embodiment, the second current breaking device further comprises a first switching device disposed on the first auxiliary branch between the inductor and a second connection of the first auxiliary branch with the second main branch.

The first switching device of the second current breaking device may be disposed on the first auxiliary branch between the second mechanical breaker and a second connection of the first auxiliary branch with the second main branch.

In an embodiment, the first switching device of the first current breaking device can be identical to the first switching device of the second current breaking device.

In a variant, the first switching device of the first current breaking device can be different from the first switching device of the second current breaking device.

In an embodiment of the current breaking apparatus, the first current breaking device further comprises a third switching device disposed on the first main branch between the first terminal and a first connection of the first auxiliary branch with the first main branch.

In an embodiment of the current breaking apparatus, the second current breaking device further comprising a third switching device disposed on the second main branch between the third terminal and a first connection of the first auxiliary branch with the second main branch.

According to an embodiment of the current breaking apparatus, the first current breaking device further comprises a second switching device disposed on the first main branch between the first connection of the first auxiliary branch with the first main branch and the second connection of the first auxiliary branch with the first main branch.

According to an embodiment of the current breaking apparatus, the second current breaking device further comprises a second switching device disposed on the second main branch between the first connection of the first auxiliary branch with the second main branch and the second connection of the first auxiliary branch with the second main branch.

Each switching device can be a two-position disconnector, or a three-position switch. A two-position disconnector has only two stable positions: a first position, called closed position, in which a mobile contact is contacting a fixed contact, enabling current circulation, and a second position, called open position, in which the mobile contact is separated from the fixed contact, interruption current circulation. This type of disconnector is also called disconnector switch.
A three-position disconnector has three stable positions: the two positions already mentioned, plus a third position in which the mobile contact is earthed. This type of disconnector is also called earth switch.

In an example of implementation of the current breaking apparatus :
- the first mechanical circuit breaker of the first current breaking device, the second mechanical circuit breaker of the first current breaking device, the second switching device of the first current breaking device and
- the first mechanical circuit breaker of the second current breaking device, the second mechanical circuit breaker of the second current breaking device, the second switching device of the second current breaking device are disposed in a gas insulated tank.

The integration of the different mechanical circuit breakers in a common gas insulated tank provides electrical insulation characteristics and environmental sensitivity, making this solution robust and reliable. Furthermore, the synchronization of the operation of the first mechanical circuit breaker, the second mechanical circuit breaker of both current breaking devices is made easier when they're arranged in the same gas insulated tank. Installation and future servicing are simplified.

In another example of implementation of the current breaking device :
- the first mechanical circuit breaker of the first current breaking device, the second mechanical circuit breaker of the first current breaking device, the first switching device of the first current breaking device, the second switching device of the first current breaking device, the third switching device of the first current breaking device and
- the first mechanical circuit breaker of the second current breaking device, the second mechanical circuit breaker of the second current breaking device, the first switching device of the second current breaking device, the second switching device of the second current breaking device, the third switching device of the second current breaking device are disposed in a gas insulated tank.

The integration of the different mechanical circuit breakers and earth switches further allows a more compact design.

In an embodiment, the capacitor bank, the inductor, the resistor and the surge arrester of the first current breaking device are disposed in a first metal enclosed compartment.

In an embodiment, the capacitor bank, the inductor, the resistor and the surge arrester of the second current breaking device are disposed in a second metal enclosed compartment.

The assembly of the current breaking device is easier when the capacitor bank, the inductor, the resistor and the surge arrester form a pre-assembled module.

In an embodiment, the capacitor bank, the inductor, the resistor, the surge arrester of the first current breaking device, and the capacitor bank, the inductor, the resistor and the surge arrester of the second current breaking device are disposed in a common metal enclosed compartment.

### Brief Description of Drawings

Other features, details and advantages will be shown in the following detailed description and on the figures, on which:
- Figure 1 is a schematic view of a hybrid AC/DC electrical network protected by a current breaking apparatus,
- Figure 2 is a schematic view of an embodiment of the proposed current breaking apparatus,
- Figure 3 is a variant of the embodiment of figure 2,

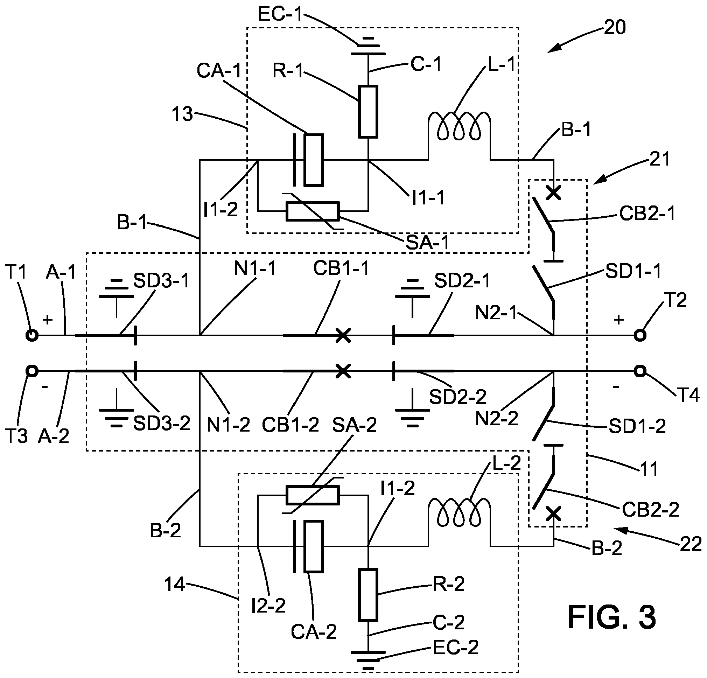

- Figure 3 is a variant of the embodiment of figure 3.

### Description of Embodiments

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

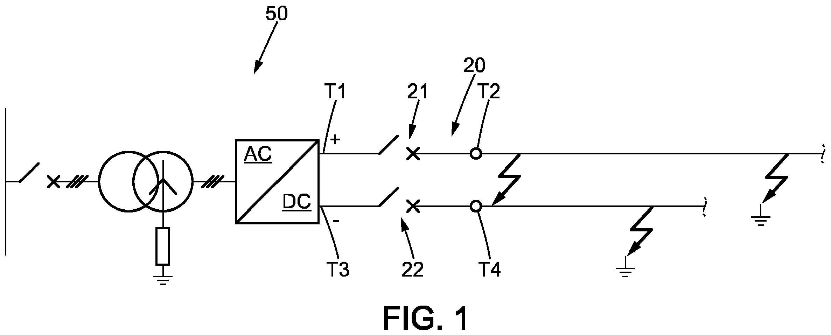

Figure 1 illustrates schematically a hybrid high voltage AC/DC network 50. The direct current part of the network comprises a positive pole and a negative pole.
A current breaking apparatus 20 protects the DC part of the network.
A direct current (DC) electrical source is connected between T1 and T3 terminals. Electrical loads are connected between T2 and T4 terminals.
By definition and in the context of this disclosure, a source is an electrical node which supplies electrical power.
Conversely, an electrical load is an electrical node which consumes electrical power

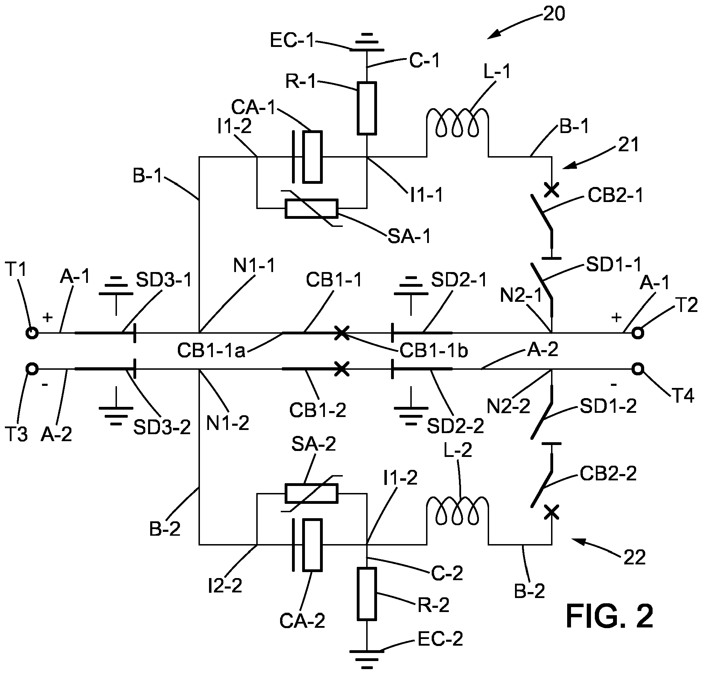

Figure 2 illustrates a current breaking apparatus 20 comprising :
- a first current breaking device 21 for interrupting a current flow in a first high voltage direct current path between a first terminal T1 and a second terminal T2, comprising :
   -- a first main branch A-1 inserted in the first direct current path, comprising a first mechanical circuit breaker CB1-1, the first mechanical circuit breaker CB1 -1 being normally closed,
   -- a first auxiliary branch B-1 connected in parallel to the first mechanical circuit breaker CB1-1, and comprising a series connection of a capacitor bank CA-1, an inductor L-1 and a second mechanical circuit breaker CB2-1, called first commutation switch, the second mechanical circuit breaker CB2-1 being normally open,
   -- a surge arrester SA-1 connected in parallel to the capacitor bank CA-1,
   -- a second auxiliary branch C-1 connecting a first intermediate terminal I1-1 comprised between the capacitor bank CA-1 and the inductor L-1 to an earthed connection EC-1, the second auxiliary branch C-1 comprising a resistor R-1.
The second mechanical circuit breaker CB2-1 is configured for closing the first auxiliary branch B-1 in response to the appearance of a fault current in the first main branch A-1, so as to create a current which is superimposed upon a current flow in the first main branch A-1 and produces a current zero crossing in the first main branch A-1.

This arrangement provides current interruption capability for pole-to-pole fault, and pole-to-earth fault with both low ohmic earthing and high ohmic earthing.

The current breaking apparatus 20 further comprises :
- a second current breaking device 22 for interrupting a current flow in a second high voltage direct current path between a third terminal T3 and a fourth terminal T4, comprising :
   -- a second main branch A-2 inserted in the second direct current path, comprising a first mechanical circuit breaker CB1-2, the first mechanical circuit breaker CB1-2 being normally closed,
   -- a first auxiliary branch B-2 connected in parallel to the first mechanical circuit breaker CB1-2, and comprising a series connection of a capacitor bank CA-2, an inductor L-2 and a second mechanical circuit breaker CB2-2, called commutation switch, the second mechanical circuit breaker CB2-2 being normally opened,
   -- a surge arrester SA-2 connected in parallel to the capacitor bank CA-2,
   -- a second auxiliary branch C-2 connecting a first intermediate terminal I1-2 comprised between the capacitor bank CA-2 and the inductance L-2 to an earthed connection EC-2, the second auxiliary branch C-2 comprising a resistor R-2.

The second mechanical circuit breaker CB2-2 is configured for closing the first auxiliary branch B-2 in response to the appearance of a fault current in the second main branch A-2, so as to create a current which is superimposed upon a current flow in the second main branch A-2 and produces a current zero crossing in the second main branch A-2.

This arrangement with a second current breaking device on a second direct current path provides current interruption capability for both pole-to-pole fault and pole-to-earth fault with low ohmic earthing, and pole-to-earth fault with high ohmic earthing. Full protection of the high voltage direct current network is thus proposed.

The first high voltage direct current path is connected to a first pole of a hybrid AC/DC network.

The first pole of the hybrid AC/DC network is here a positive, current supply pole.

The second high voltage direct current path is connected to a second pole of the hybrid AC/DC network.

The second pole of the hybrid AC/DC network is a negative, current return pole.

The first current breaking device 21 and the second current breaking device 22 have the same structure.

In an embodiment of the current breaking apparatus 20, the first current breaking device 21 and the second current breaking device 22 are identical.

In this case, the first current breaking device 21 and the second current breaking device 22 have the same structure and the same characteristics for inductor L-1, L-2, capacitor bank CA-1, CA-2, resistor R-1, R-2 and surge arrester SA-1, SA-2.

This configuration is particularly adapted to networks with low ohmic earthing. Within the context of network with low ohmic earthing, the first current breaking device and the second current breaking device both interrupt pole-to-pole faults and pole-to-earth faults.

In an alternative embodiment of the current breaking apparatus 20 :
- a capacitance of the capacitor bank CA-1 of the first current breaking device 21 is different from a capacitance of the capacitor bank CA-2 of the second current breaking device 22, and/or
- an inductance of the inductor L-1 of the first current breaking device 21 is different from an inductance of the inductor L-2 of the second current breaking device 22, and/or
- a resistance of the resistor R-1 of the first current breaking device 21 is different from a resistance of the resistor R-2 of the second current breaking device 22.

In other words, the first current breaking device 21 and the second current breaking device 22 have the same structure but are not identical, since the characteristics of one or more among their respective inductor L-1, L-2, capacitor bank CA-1, CA-2, resistor R-1, R-2 and surge arrester SA-1, SA-2 are different.

This configuration is particularly adapted to networks with high ohmic earthing. Within the context of network with high ohmic earthing, one current breaking device interrupts pole-to-pole faults and pole-to-earth faults, and the other current breaking device interrupt pole-to-earth faults only.

The second mechanical circuit breaker CB2-1 of the first current breaking device 21 can be different from the second mechanical circuit breaker CB2-2 of the second current breaking device 22.

The first main branch A-1 and the second main branch A-2 are respectively a main electrical conduction line of the first current breaking device 21 and of the second current breaking device 22.

The first auxiliary branch B-1 of the first current breaking device 21 and the first auxiliary branch B-2 of the second current breaking device 22 are respectively a secondary electrical conduction line of the first current breaking device 21 and of the second current breaking device 22.

The second auxiliary branch C-1 of the first current breaking device 21 and the second auxiliary branch C-2 of the second current breaking device 22 are respectively a tertiary electrical conduction line of the first current breaking device 21 and of the second current breaking device 22.

The first current breaking device 21 can operate in a first mode, called normal operation mode, in which the first mechanical circuit breaker CB1-1 of the first current breaking device 21 is closed and the second mechanical circuit breaker CB2-1 of the first current breaking device 21 is opened.

This is the mode represented on figure 2 and figure 3.

The first current breaking device 21 can operate in a second mode, called fault mode, in which the first mechanical breaker CB1-1 of the first current breaking device 21 is opened and the second mechanical breaker CB2-1 of the first current breaking device 21 is closed.

This operation mode has not been represented.

The first current breaking device 21 can switch from the first mode to the second mode in response to the appearance of a fault current in the first main branch A-1.
The appearance of a fault current may be the result of a pole-to-pole short circuit, or of a pole to earth short circuit.

When a fault current appears in the first main branch A-1 of the first current breaking device 21, the closing of the second mechanical circuit breaker CB2-1 induces the creation of an oscillating current through the first auxiliary branch B-1, which superimposes to the current flow in the first main branch A-1. The amplitude of the oscillations creates zero-crossing events of the current in the first main branch A-1, which makes possible the interruption of the current in the first main branch A-1 by the first mechanical circuit breaker CB1 -1 of the first current breaking device 21.

The first current breaking device 21 can further operate in a third mode, called residual current fault mode, in which the first mechanical circuit breaker CB1-1 is in an open state and the second mechanical circuit breaker CB2-1 is in an open state.

The first current breaking device 21 can switch from the second mode to the third mode is response to the appearance of a residual fault current in the first auxiliary branch B-1.

The first current breaking device 21 can operate in a fourth mode, called normal operation mode after fault interruption, in which the first mechanical circuit breaker CB1-1 is in a closed state and the second mechanical circuit breaker CB2-1 is in an open state.

The first current breaking device 21 can switch from the third mode to the fourth mode after re-charging of the capacitor bank CA-1 by a current flow from the source side to the resistor R-1 of the second auxiliary branch C-1.

In the same way, the second current breaking device 22 can operate in a first mode, called normal operation mode, in which the first mechanical circuit breaker CB1-2 of the second current breaking device 22 is closed and the second mechanical circuit breaker CB2-2 of the second current breaking device 22 is opened.

The second current breaking device 22 can operate in a second mode, called fault mode, in which the first mechanical breaker CB1-2 of the second current breaking device 22 is opened and the second mechanical breaker CB2-2 of the second current breaking device 22 is closed.

The second current breaking device 22 can switch from the first mode to the second mode in response to the appearance of a fault current in the second main branch A2.

The second current breaking device 22 can further operate in a third mode, called residual current fault mode, in which the first mechanical circuit breaker CB1-2 is in an open state and the second mechanical circuit breaker CB2-2 is in an open state.
The second current breaking device 22 can switch from the second mode to the third mode is response to the appearance of a residual fault current in the first auxiliary branch B-2. The second current breaking device 22 can further operate in a fourth mode, called normal operation mode after fault interruption, in which the first mechanical circuit breaker CB1-2 is in a closed state and the second mechanical circuit breaker CB2-2 is in an open state. The second current breaking device 22 can switch from the third mode to the fourth mode after re-charging of the capacitor bank CA-2 by a current flow from the source side to the resistor R-2 of the second auxiliary branch C-2.

As with the first current breaking device 21, the appearance of a fault current in the second current breaking device 22 may be the result of a pole-to-pole short circuit, or of a pole to earth short circuit.

The second current breaking device 22 operates in the same way as the first current breaking device 21.
When a fault current appears in the first main branch A-2 of the second current breaking device 22, the closing of the second mechanical circuit breaker CB2-2 induces the creation of an oscillating current through the first auxiliary branch B-2, which superimposes to the current flow in the second main branch A-2. The amplitude of the oscillations creates zero-crossing events of the current in the second main branch A-2, which makes possible the interruption of the current in the second main branch A-2 by the first mechanical circuit breaker CB1-2 of the second current breaking device 22.

Each of the first mechanical circuit breaker CB1-1, CB1-2, and second mechanical circuit breaker CB2-1, CB2-2 may comprise a vacuum interrupter.

The inductance of the inductor L-1 of the first current breaking device 21 is comprised between 10 µH and 1 mH.
The capacitance of the capacitor bank CA-1 of the first current breaking device 21 is comprised between 3 µF and 300 µF.
The resistance of the resistor R-1 of the first current breaking device 21 is higher than 1000 Ohm.

A ratio of the pole-to-ground voltage and the resistance of the first current breaking device 21 is lower than 2A.
A product of the inductance and the capacitance of the first current breaking device 21 is comprised between 3.10⁻¹¹ s² and 3.10⁻⁷ s².

The surge arrester SA-1 of the first current breaking device 21 is chosen to conduct a current of less than 10 A when subjected to a pole-to-ground voltage.

The inductance of the inductor L-2 of the second current breaking device 22 is comprised between 10 µH and 1 mH.
The capacitance of the capacitor bank CA-2 of the second current breaking device 22 is comprised between 3 µF and 300 µF.
The resistance of the resistor R-2 of the second current breaking device 22 is higher than 1000 Ohm.

A ratio of the pole-to-ground voltage and the resistance of the second current breaking device 22 is lower than 2A.
A product of the inductance and the capacitance of the second current breaking device 22 is comprised between 3.10⁻¹¹ s² and 3.10⁻⁷ s².

The surge arrester SA-2 of the second current breaking device 22 is chosen to conduct a current of less than 10 A when subjected to a pole-to-ground voltage.

The first auxiliary branch B-1 of the first current breaking device 21 comprises a first connection N1-1 with the first main branch A-1 and a second connection N2-1 with the first main branch A-1. The first connection N1-1 of the first auxiliary branch B-1 of the first current breaking device 21 with the first main branch A-1 of the first current breaking device 21 is comprised between the first terminal T1 and a first terminal CB1-1a of the first mechanical circuit breaker CB1-1 of the first current breaking device 21. The second connection N2-1 is comprised between the second terminal T2 and a second terminal CB1-1b of the first mechanical circuit breaker CB1-1 of the first current breaking device 21.

In the same way, the first auxiliary branch B-2 of the second current breaking device 22 comprises a first connection N1-2 with the second main branch A-2 and a second connection N2-2 with the second main branch A-2. The first connection N1-2 of the second auxiliary branch B-2 of the second current breaking device 22 with the second main branch A-2 of the second current breaking device 22 is comprised between the third terminal T3 and a first terminal of the first mechanical circuit breaker CB1-2 of the second current breaking device 22. The second connection N2-1 is comprised between the fourth terminal T4 and a second terminal of the first mechanical circuit breaker CB1-2 of the second current breaking device 22.

A first terminal of the resistor R-1 is directly connected to the earth, indicated by the earthed connection EC-1.
The second terminal of the resistor R-1 is directly connected to a first terminal of the capacitor bank CA-1, called first intermediate terminal 11-1.
The surge arrester SA-1 and the capacitor bank CA-1 are connected in parallel between the first intermediate terminal I1-1 and the first connection N1-1.
On the schematics, the first intermediate terminal 11-1 is also a first connection between the surge arrester SA-1 and the capacitor bank CA-1.
The second intermediate terminal 11-2 represents a second connection between the surge arrester SA-1 and the capacitor bank CA-1.
On the schematic, the resistor R-1 and the surge arrester SA-1 are both connected to the capacitor bank CA-1 in a common node. The connecting nodes could also be staggered along the second auxiliary branch B-2.
A first terminal of the inductance L-1 is directly connected to the first intermediate terminal I1-1.
The second terminal of the inductor L-1 is connected to the first main branch A-1 through the second mechanical circuit breaker CB2-1.
The arrangement of the electrical connections between the components of the second current breaking device 22 is identical to the arrangement of the first current breaking device 21.
The resistor R-2 and the surge arrester SA-2 are connected in parallel between nodes I2-1 and I2-2, and resistor R2 is connected between node I2-1 and earth connection EC-2.

The first current breaking device 21 further comprises a first switching device SD1-1 disposed on the first auxiliary branch B-1 between the inductor L-1 and the second connection N2-1 of the first auxiliary branch B-1 with the first main branch A-1.
On the illustrated example, the first switching device SD1-1 of the first current breaking device 21 is disposed on the first auxiliary branch B-1 between the second mechanical circuit breaker CB2-1 and the second connection N2-1 of the first auxiliary branch B-1 with the first main branch A-1.

The second current breaking device 22 further comprises a first switching device SD1-2 disposed on the first auxiliary branch B-2 between the inductor L2 and the second connection N2-2 of the first auxiliary branch B-2 with the second main branch A-2.
On the illustrated example, the first switching device SD1-2 of the second current breaking device 22 may be disposed on the first auxiliary branch B-2 between the second mechanical breaker CB2-2 and the second connection N2-2 of the first auxiliary branch B2 with the second main branch A2.

The first switching device SD1-1 of the first current breaking device 21 can be identical to the first switching device SD1-2 of the second current breaking device 22.
As a variant, the first switching device SD1-1 of the first current breaking device 21 can be different from the first switching device SD1-2 of the second current breaking device 22.

The first current breaking device 21 further comprises a second switching device SD2-1 disposed on the first main branch A-1 between the first connection N1-1 of the first auxiliary branch B-1 with the first main branch A-1 and a second connection N2-1 of the first auxiliary branch B-1 with the first main branch A-1.
In the same way, the second current breaking device 22 further comprises a second switching device SD2-2 disposed on the second main branch A-2 between the first connection N1-2 of the first auxiliary branch B-2 with the second main branch A-2 and a second connection N2-2 of the first auxiliary branch B-2 with the second main branch A-2.

The first current breaking device 21 further comprises a third switching device SD3-1 disposed on the first main branch A-1 between the first terminal T1 and a first connection N1-1 of the first auxiliary branch B-1 with the first main branch A-1.
The second current breaking device 22 further comprising a third switching device SD3-2 disposed on the second main branch A-2 between the third terminal T3 and a first connection N1-2 of the first auxiliary branch B-2 with the second main branch A-2.
In other words, the first and second main branches both respectively comprise, in the portion comprised between the first connection of the first auxiliary branch and the second connection of the first auxiliary branch, a series connection of a first mechanical circuit breaker and a third switching device.

Each switching device SD1-1, SD1-2, SD2-1, SD2-2, SD3-1, SD3-2 can be a two-position disconnector, or a three-position switch.
A two-position disconnector has only two stable positions: a first position, called closed position, in which a mobile contact is contacting a fixed contact, enabling current circulation, and a second position, called open position, in which the mobile contact is separated from the fixed contact, interruption current circulation. This type of disconnector is also called disconnector switch.
A three-position disconnector has three stable positions: the two positions already mentioned, plus a third position in which the mobile contact is earthed. This type of disconnector is also called earth switch.

In the illustrated example, the second switching devices SD2-1, SD2-2 and third switching devices SD3-1, SD3-2 are earth switches. The second switching devices SD2-1 , SD2-2 and third switching devices SD3-1 , SD3-2 provide capability to safely discharge the capacitors of the commutation circuit.
The switching devices SD1-1, SD1-2 are two-position disconnectors in the illustrated example.

Figure 3 schematically illustrates an embodiment of the current breaking apparatus 20 derived from the embodiment represented on figure 2.

In this embodiment of the current breaking apparatus 20 :
- the first mechanical circuit breaker CB1-1 of the first current breaking device 21, the second mechanical circuit breaker CB2-1 of the first current breaking device 21, the second switching device SD2-1 of the first current breaking device 21 and
- the first mechanical circuit breaker CB1-2 of the second current breaking device 22, the second mechanical circuit breaker CB2-2 of the second current breaking device 22, the second switching device SD2-2 of the second current breaking device 22 are disposed in a gas insulated tank 11.

The integration of the different mechanical circuit breakers CB1-1, CB1-2, CB2-1, CB2-2 in a common gas insulated tank 11 provides electrical insulation characteristics and environmental sensitivity, making this solution robust and reliable. Furthermore, the synchronization of the operation of the first mechanical circuit breaker CB1-1, CB1-2, the second mechanical circuit breaker CB2-1, CB2-2 of both current breaking devices 21,22 is made easier when the different components are arranged in a common gas insulated tank 11. The installation of the current breaking apparatus 20 and its future servicing are simplified.

On the example of figure 3, the third switching device SD3-1, SD3-2 and the first switching devices SD1-1, SD1-2 are also integrated into the gas insulated tank 11.

More precisely :
- the first mechanical circuit breaker CB1-1 of the first current breaking device 21, the second mechanical circuit breaker CB2-1 of the first current breaking device 21, the first switching device SD1-1 of the first current breaking device 21, the second switching device SD2-1 of the first current breaking device 21, the third switching device SD3-1 of the first current breaking device 21 and
- the first mechanical circuit breaker CB1-2 of the second current breaking device 22, the second mechanical circuit breaker CB2-2 of the second current breaking device 22, the first switching device SD1-2 of the second current breaking device 22, the second switching device SD2-2 of the second current breaking device 22, the third switching device SD3-2 of the second current breaking device 22 are disposed in a gas insulated tank 11.

The integration of the different mechanical circuit breakers and earth switches further allows a more compact design.

In the embodiment of figure 3, the capacitor bank CA-1, the inductor L-1, the resistor R-1 and the surge arrester SA-1 of the first current breaking device 21 are disposed in a first metal enclosed compartment 13.

Furthermore, the capacitor bank CA-2, the inductor L-2, the resistor R-2 and the surge arrester SA-2 of the second current breaking device 22 are disposed in a second metal enclosed compartment 14.

The assembly of each current breaking device 21,22 is easier when their respective capacitor bank, inductor, resistor and surge arrester form a pre-assembled module.

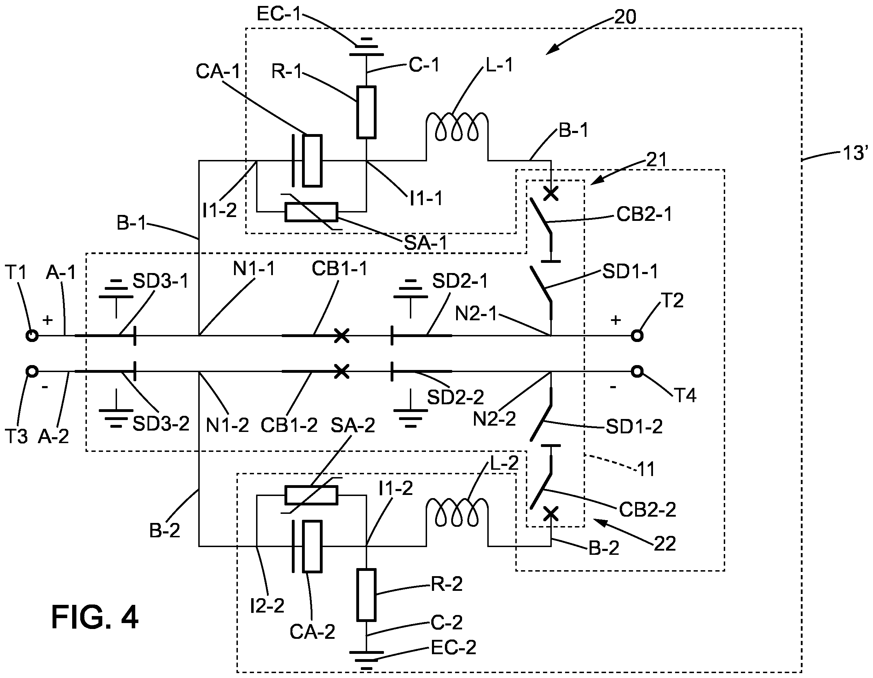

In a variant illustrated on figure 4, the first metal enclosed compartment 13 and the second metal enclosed compartment 14 are the same metal enclosed compartment.

The capacitor bank CA-1, the inductor L-1, the resistor R-1, the surge arrester SA-1 of the first current breaking device 21, and the capacitor bank CA-2, the inductor L-2, the resistor R-2 and the surge arrester SA-2 of the second current breaking device 22 are disposed in a common metal enclosed compartment 13'.

The main components generating the oscillating current for zero-crossing and current interruption in the main branches A-1 and A-2 are all integrated in a common casing, making their integration easier.

## Claims

1. Current breaking apparatus (20) comprising :
- a first current breaking device (21) for interrupting a current flow in a first high voltage direct current path between a first terminal (T1) and a second terminal (T2), comprising :
-- a first main branch (A-1) inserted in the first direct current path, comprising a first mechanical circuit breaker (CB1-1), the first mechanical circuit breaker (CB1-1) being normally closed,
-- a first auxiliary branch (B-1) connected in parallel to the first mechanical circuit breaker (CB1-1), and comprising a series connection of a capacitor bank (CA-1), an inductor (L-1) and a second mechanical circuit breaker (CB2-1), called first commutation switch, the second mechanical circuit breaker (CB2-1) being normally opened,
-- a surge arrester (SA-1) connected in parallel to the capacitor bank (CA-1),
-- a second auxiliary branch (C-1) connecting a first intermediate terminal (11-1) comprised between the capacitor bank (CA-1) and the inductor (L-1) to an earthed connection, the second auxiliary branch (C-1) comprising a resistor (R-1),
in which the second mechanical circuit breaker (CB2-1) is configured for closing the first auxiliary branch (B-1) in response to the appearance of a fault current in the first main branch (A-1), so as to create a current which is superimposed upon a current flow in the first main branch (A-1) and produces a current zero crossing in the first main branch (A-1).

2. Current breaking apparatus (20) according to claim 1, further comprising :
- a second current breaking device (22) for interrupting a current flow in a second high voltage direct current path between a third terminal (T3) and a fourth terminal (T4), comprising :
-- a second main branch (A-2) inserted in the second direct current path, comprising a first mechanical circuit breaker (CB1-2), the first mechanical circuit breaker (CB1-2) being normally closed,
-- a first auxiliary branch (B-2) connected in parallel to the first mechanical circuit breaker (CB1-2), and comprising a series connection of a capacitor bank (CA-2), an inductor (L-2) and a second mechanical circuit breaker (CB2-2), called commutation switch, the second mechanical circuit breaker (CB2-2) being normally opened,
-- a surge arrester (SA-2) connected in parallel to the capacitor bank (CA-2),
-- a second auxiliary branch (C-2) connecting a first intermediate terminal (11-2) comprised between the capacitor bank (CA-2) and the inductor (L-2) to an earthed connection, the second auxiliary branch (C-2) comprising a resistor (R-2),
in which the second mechanical circuit breaker (CB2-2) is configured for closing the first auxiliary branch (B-2) in response to the appearance of a fault current in the second main branch (A-2), so as to create a current which is superimposed upon a current flow in the second main branch (A-2) and produces a current zero crossing in the second main branch (A-2).

3. Current breaking device (20) according to claim 2, in which:
- the first high voltage direct current path is connected to a first pole of a hybrid AC/DC network (50), and
- the second high voltage direct current path is connected to a second pole of the hybrid AC/DC network (50).

4. Current breaking apparatus (20) according to claim 2 or 3, in which the first current breaking device (21) and the second current breaking device (22) are identical.

5. Current breaking apparatus (20) according to claim 2 or 3, in which :
- a capacitance of the capacitor bank (CA-1) of the first current breaking device (21) is different from a capacitance of the capacitor bank (CA-2) of the second current breaking device (22), and/or
- an inductance of the inductor (L-1) of the first current breaking device (21) is different from an inductance of the inductor (L-2) of the second current breaking device (22), and/or
- a resistance of the resistor (R-1) of the first current breaking device (21) is different from a resistance of the resistor (R-2) of the second current breaking device (22).

6. Current breaking apparatus (20) according to any of the preceding claims, in which the first current breaking device (21) further comprises a first switching device (SD1-1) disposed on the first auxiliary branch (B-1) between the inductor (L-1) and a second connection (N2-1) of the first auxiliary branch (B-1) with the first main branch (A-1).

7. Current breaking apparatus (20) according to any of the preceding claims in combination with claim 2, in which the second current breaking device (22) further comprises a first switching device (SD1-2) disposed on the first auxiliary branch (B-2) between the inductor (L-2) and a second connection (N2-2) of the first auxiliary branch (B-2) with the second main branch (A-2).

8. Current breaking apparatus (20) according to any of the preceding claims in combination with claims 6 and 7, in which :
- the second mechanical circuit breaker (CB2-1) of the first current breaking device (21) is different from the second mechanical circuit breaker (CB2-2) of the second current breaking device (22), and/or
- the first switching device (SD1-1) of the first current breaking device (21) is different from the first switching device (SD1-2) of the second current breaking device (22).

9. Current breaking apparatus (20) according to any of the preceding claims, in which the first current breaking device (21) further comprises a second switching device (SD2-1) disposed on the first main branch (A-1) between a first connection (N1-1) of the first auxiliary branch (B-1) with the first main branch (A-1) and a second connection (N2-1) of the first auxiliary branch (B-1) with the first main branch (A-1).

10. Current breaking apparatus (20) according to any of the preceding claims in combination with claim 2, in which the second current breaking device (22) further comprises a second switching device (SD2-2) disposed on the second main branch (A-2) between a first connection (N1-2) of the first auxiliary branch (B-2) with the second main branch (A-2) and a second connection (N2-2) of the first auxiliary branch (B-2) with the second main branch (A-2).

11. Current breaking apparatus (20) according to any of the preceding claims, in which the first current breaking device (21) further comprises a third switching device (SD3-1) disposed on the first main branch (A-1) between the first terminal (T1) and a first connection (N1-1) of the first auxiliary branch (B-1) with the first main branch (A-1).

12. Current breaking apparatus (20) according to any of the preceding claims in combination with claim 2, in which the second current breaking device (22) further comprising a third switching device (SD3-2) disposed on the second main branch (A-2) between the third terminal (T3) and a first connection (N1-2) of the first auxiliary branch (B-2) with the second main branch (A-2).

13. Current breaking apparatus (20) according to any of the preceding claims in combination with claims 9 and 10, in which :
- the first mechanical circuit breaker (CB1-1) of the first current breaking device (21), the second mechanical circuit breaker (CB2-1) of the first current breaking device (21), the second switching device (SD2-1) of the first current breaking device (21) and
- the first mechanical circuit breaker (CB1-2) of the second current breaking device (22), the second mechanical circuit breaker (CB2-2) of the second current breaking device (22), the second switching device (SD2-2) of the second current breaking device (22) are disposed in a gas insulated tank (11).

14. Current breaking device (20) according to the preceding claim in combination with claims 6, 7, 11, 12, in which :
- the first mechanical circuit breaker (CB1-1) of the first current breaking device (21), the second mechanical circuit breaker (CB2-1) of the first current breaking device (21), the first switching device (SD1-1) of the first current breaking device (21), the second switching device (SD2-1) of the first current breaking device (21), the third switching device (SD3-1) of the first current breaking device (21) and
- the first mechanical circuit breaker (CB1-2) of the second current breaking device (22), the second mechanical circuit breaker (CB2-2) of the second current breaking device (22), the first switching device (SD1-2) of the second current breaking device (22), the second switching device (SD2-2) of the second current breaking device (22), the third switching device (SD3-2) of the second current breaking device (22) are disposed in a gas insulated tank (11).

15. Current breaking device (20) according to any of the preceding claims, in which the capacitor bank (CA-1), the inductor (L-1), the resistor (R-1) and the surge arrester (SA-1) of the first current breaking device (21) are disposed in a first metal enclosed compartment (13).

16. Current breaking device (20) according to any of the preceding claims in combination with claim 2, in which the capacitor bank (CA-2), the inductor (L-2), the resistor (R-2) and the surge arrester (SA-2) of the second current breaking device (22) are disposed in a second metal enclosed compartment (14).

17. Current breaking device (20) according to any of claims 1 to 14 in combination with claim 2, in which the capacitor bank (CA-1), the inductor (L-1), the resistor (R-1), the surge arrester (SA-1) of the first current breaking device (21), and the capacitor bank (CA-2), the inductor (L-2), the resistor (R-2) and the surge arrester (SA-2) of the second current breaking device (22) are disposed in a common metal enclosed compartment (13').
